# EUROPEAN PATENT SPECIFICATION

(11) **EP 4 117 877 B1**
(45) Date of publication and mention of the grant of the patent: **13.08.2025**
(21) Application number: 21732994.5
(22) Date of filing: 16.06.2021
(51) Int. Cl.: B29B 7/24, B29B 7/28, B29B 7/58, B29B 7/60, B29B 7/78, B29C 48/285, B29C 31/02, F16K 3/02, F16K 3/34, G01G 21/00, B29B 7/72, B29C 31/06, B29C 48/25, B29C 48/92, G01G 13/18

(54) **DOSING APPARATUS AND METHOD FOR FORMING POLYMERIC MIXTURES**
DOSIERVORRICHTUNG UND VERFAHREN ZUR HERSTELLUNG VON POLYMERMISCHUNGEN
APPAREIL DE DOSAGE ET PROCÉDÉ DE FORMATION DE MÉLANGES POLYMÈRES

(30) Priority: 23.06.2020 IT 202000015103
(43) Date of publication of application: 18.01.2023
(73) Proprietor: Piovan S.P.A., 30036 Santa Maria di Sala (VE) (IT)
(72) Inventor: BELLIO, Enrico, 31050 Ponzano Veneto (TV) (IT); CAPPELLINI, Davide, 26029 Soncino (CR) (IT)
(74) Representative: Luppi Intellectual Property S.r.l.
(86) International application number: PCT/IB2021/055326
(87) International publication number: WO 2021/260501

(56) References cited:
- EP-A1- 2 818 235
- DE-C1- 19 806 729
- US-A- 3 822 866
- US-A- 3 959 636
- US-A1- 2015 217 878
- US-A1- 2016 339 404
- US-B1- 6 188 936

## Description

The invention relates to a dosing apparatus and method for forming polymeric mixtures, in particular for dosing loose or incoherent plastics, having a granular and/or microgranular and/or flake and/or powder or similar shape, such as for example polymeric, additive or other ingredients (for example fillers) of a polymeric mixture used to produce an object made of plastics.

In particular, the invention relates to a control method for controlling a dosing apparatus for machines designed to supply plants for treating and transforming the aforesaid plastics, for example plants for extrusion and subsequent injection, blow, compression moulding.

Patent publication US 6188936 B1 discloses an apparatus according to the preamble of claim 1. Further dosing apparatuses are disclosed in US 3 822 866 A, US 2015/217878 A1 and DE 198 06 729 C1.

Dosing and/or mixing machines are known that include dosing apparatuses that dispense, to an underlying operating unit, dosed quantities of different granular plastics that make up a mixture to be treated. In a dosing machine, the operating unit can be connected directly to a transformation machine, such as for example an extruder or an injection press. In one mixing machine the operating unit is, generally, a mixing unit upstream of a possible transformation machine and downstream of the dosing apparatus. Typical, the dosing and/or mixing machines comprise a plurality of loading tanks or hoppers that contain the respective polymeric products or additives or other things, in incoherent format, and which feed the dosing apparatus, that can be of gravimetric or volumetric type. Dosing and/or mixing machines that comprise a dosing apparatus for each product hopper are known.

In known dosing apparatuses, extractor means are used such as feed screws, drums, and discs that remove from the hoppers set volumes of material to be transferred to the operating unit, such as for example the mixing unit. Alternatively to the extracting means, each hopper of the dosing apparatus is provided with a gate or shutter that, by linear or rotational linear movements, opens or closes a dosing and discharge opening of the hopper.

It is known that the quantity of material dosed in the unit of time is a function of the dimensions and geometric characteristics of the dosing apparatus and of the features of the incoherent plastics, these latter being chemical physical features such as, for example, specific weight, shape, dimensions, flowability, type of polymer, type of filler, type of additive, temperature of the granules, humidity of the granules, etc. It is also known that the dimensions and geometric features of the dosing apparatus, and the features of the incoherent plastics influence the dosing time.

The volumetric dosing apparatuses are more influenced by the features of the product to be dosed and are thus suitable for applications in which the required dosing precision is not high and for dosing a plurality of products having features (specific weight, shape, dimensions, flowability, etc) that are similar to one another.

In dosing apparatuses of gravimetric type, weighting systems are provided that control continuously and with feedback the quantity or volume of product exiting the hoppers, measuring the weight variation of the latter during the exit of the product (gravimetric dosing with weight loss and/or batch dosing). Adjusting means are known that control the flow of product exiting the hoppers on the basis of the weighing system. More precisely, the flow of exiting product is arrested when a set quantity of product detected by the weighing systems has been dosed.

In general, gravimetric dosing apparatuses are also used for applications in which the required dosing precision is higher (for example, with an error, i.e. a deviation from the set point value of the required dosed quantity, that is less than 1% by weight).

In volumetric or gravimetric dosing apparatuses, provided with a dosage gate, the gate (shutter) is generally moved between an open position and a closed position by a pneumatic linear actuator or by an electric actuator.

The quantity of dosed product is a function of the exiting flowrate and of the open time of the shutter. The exiting flowrate in turn depends on the dimensions of the discharge opening and on the features (specific weight, shape, dimensions, flowability, etc) of the dosed material. In order to dose high quantities of product, a long period of opening of the shutter and/or large dimensions of the discharge opening are required. On the other hand, in order to dose reduced quantities of product, a short opening time and/or limited dimensions of the discharge opening are required.

Using a discharge opening having intermediate dimensions, it is necessary, in the case of large doses, to set long shutter opening times, which causes long dosing times and thus a reduction of productivity in relation to the cycle time of the transformation apparatus. On the other hand, in the case of small doses, opening times cannot be reduced below a certain limit set by the dynamic behavior of the shutter, by the mechanical features of the actuator and/or by the dynamic response times of the drives, in particular if they are pneumatic, and lastly by dosing precision.

In particular, in the opening and closing steps a certain quantity of material - which is not quantifiable with precision - exits the discharge opening whilst the shutter moves, said quantity being more significant the less the quantity of product to be dosed.

One drawback of known dosing apparatuses lies in the fact that known dosing apparatuses have limited dosing fields or ranges because they are sized in function of the quantities of product to be dosed and in function of the features of the material to be dosed.

Once the dosing apparatus has been sized for the specific application, for example to meet the dosed material requirement of the machine downstream, a known dosing apparatus requires an elaborate preliminary adjusting operation of the shutter.

In fact, the opening time of the shutter has to take account of the command response delay, of the response delay of the drive device for driving the shutter, of the inertia of the drive device, and thus of the type of drive device for driving the shutter, whether pneumatic linear or electric, in addition to features of the product (specific weight, shape, dimensions, flowability, etc).

Nevertheless, despite the initial laborious regulation, the dosing apparatuses provided with a shutter dose that set material having set features defined at the preliminary conditions.

As the features of the material that is gradually introduced into the hopper may deviate over time from those that the material had at the preliminary adjusting conditions, these dosing apparatuses supply dosed quantities with precision that is not constant over time. In other words, the dosing apparatuses provided with a shutter are affected by the variations that the same material may undergo over time in terms of features.

Another drawback present in dosing systems provided with a shutter driven by a pneumatic actuator is that in the event of an inconstant supply pressure of the compressed air line this pressure variation directly affects the actuator drive time and consequently dosing precision.

In dosing apparatuses of gravimetric type, owing to the control of the weight of the dosed quantity it is possible to overcome certain drawbacks of the volumetric apparatuses, reaching greater dosing precision.

Despite this, environmental conditions - such as temperature, humidity of the environment and the possibility that the material receives electrostatic charges - affect, individually or in a combined manner, the descent behavior of the material from the containers provided, greatly impacting the final dosing result and the creation of a mixture that is dosed in terms of precision and repeatability and the variation of the aforesaid environmental conditions over time are not predictable.

Also the different installation and use condition of the gravimetric dosing apparatus, like the position thereof, the dynamics of the transforming machine to which the dosing apparatus is subjected - defined as an injection and/or extruder press, etc -, influence the precision of the apparatus.

Accordingly, one drawback of known dosing apparatuses of gravimetric type is that the dosed quantities are subjected to the influence of the environmental conditions, and of the installation and use conditions of the dosing station, which does not allow great repeatability to be obtained.

Known dosing apparatuses, volumetric and gravimetric, thus have different limits in terms of the precision and repeatability of the dosed quantity.

It is thus desirable to obtain a more versatile and precise dosing apparatus, having reduced dosing operation execution times so as to ensure greater hourly production.

### Summary of the invention

One object of the present invention is to improve known dosing apparatuses for incoherent plastics, i.e. plastics in granular, microgranular, flake, powder or similar form.

One object is to provide an alternative solution to the volumetric and gravimetric dosing apparatuses of batch type of the prior art, in particular dosing apparatuses that are associable with machines that feed plants for treating and transforming the aforesaid plastics.

One object is to solve one or more of the limits and drawbacks disclosed above of the prior art dosing apparatuses.

One advantage is to obtain a dosing apparatus in which the dosing precision is not influenced by environmental conditions, by installation and use conditions of the dosing station and by the features of the material.

One advantage is to improve dosing precision.

One advantage is to make a dosing apparatus that enables different quantities and types of products to be dosed precisely and effectively, and a wide dosing range to be obtained.

One advantage is to increase hourly production without foregoing a high level of precision and repeatability.

These objects and advantages, and more besides, are achieved by a method and/or an apparatus according to one or more of the claims reported below.

In one example, a dosing apparatus comprises one or more dosing stations, each equipped with a shutter element that can be operated on command to control the dosed quantity, by varying a dosing aperture section or a speed of the shutter element, according to a weighing signal which continuously and in real time communicates a data relating to the weight of the dosed quantity. A control unit can correct the dosing opening section or the shutter element speed or both, to adapt to the operating conditions such as dosage percentage, chemical-physical features of the product to be dosed, environmental conditions, installation and use conditions of the dosing station.

It is possible to memorize and adjust one or more dosing parameters of the shutter element (position and/or speed and/or acceleration and/or opening time of the shutter element) to the operating conditions, to the installation and use conditions of the dosing station, environmental conditions, also allowing to establish the correct dosage sequence in case of creation of a mixture of different bulk materials.

In one embodiment, a dosing method comprises the steps of setting up a dispensing sequence between several dosing stations, one at a time, in which for each dosing station there is a respective shutter element which is operated in opening, a respective product that comes out of a respective feeding hopper and falls into a batch hopper common to the various dosing stations, a weighing unit detects a weight of the product that has fallen into the batch hopper and sends it to a control unit which compares the weight detected with a reference weight (expected weight or desired weight) and, if the weight detected is outside the admissible tolerance, it uses a calculation algorithm, based on a function (for example obtained empirically) in which the weight of the fallen product is a function of at least one operating parameter of the shutter element, to calculate a value of the aforementioned operating parameter, which will then be used as the set point value to control the subsequent actuation of the respective shutter element of the respective dosing station. The aforementioned at least one operating parameter may comprise one or two or more of the following parameters of the shutter element: opening position, residence time in opening, opening speed, closing speed, opening speed profile, closing speed profile, opening acceleration, closing acceleration.

The invention allows to overcome the disadvantages of known dosing apparatuses, by acting on the dosing opening section of the dosing station or on the speed of the shutter element, to adapt the quantity of dosed product to the environmental conditions, to the installation conditions of the dosing station, to the flow rate requests of the operating machine downstream of the dosing apparatus, to the chemical-physical features of the product to be dosed. The invention provides for the use of the weighing signal which (in particular, in continuous and in real time) communicates the data relating to the weight to the control unit which, thanks to an algorithm, corrects the dosage by acting, in particular, on the dosage opening and/or the speed of the shutter element. The data relating to the dosage opening and the speed of the shutter element are stored in a memory unit in order to obtain a predictive system of the quantity dispensed for the next dosage. The possibility of memorizing and adapting the dosage method to the operating conditions, the installation conditions and the environmental conditions also allows to establish the correct dosage sequence in case of creation of a mixture of different bulk materials, in such a way as to reduce the mistakes. Thanks to the invention it is possible to improve the dosing precision of plastic materials if there are several dosing stations.

The invention can be better understood and implemented with reference to the attached drawings which illustrate some exemplary and non-limiting forms of implementation, wherein:
- Figure 1 is a schematic side view of an embodiment of a dosing apparatus made according to the present invention;
- Figure 2 is a schematic front view of an embodiment of a dosing apparatus made according to the present invention which comprises a plurality of dosing stations;
- Figure 3 is a block diagram illustrating the steps of an embodiment of a method for controlling the dosing apparatus of Figure 1;
- Figure 4 is a partial section of an embodiment of a dosing element provided in the apparatus of Figure 1;
- Figure 5 shows an experimental graph relating to the operation of a dosing gate with an actuation, for example, of the electric type;
- Figure 6 shows, by way of example, an experimental graph of the flow rate of plastic granules that pass through the dosing gate as a function of the opening of the gate itself;
- Figure 7 shows an experimental graph, obtained by setting a fixed opening time of the dosing gate, of a dosing profile, and therefore of a flow rate of the material (in g/s), which is a function of the passage section.

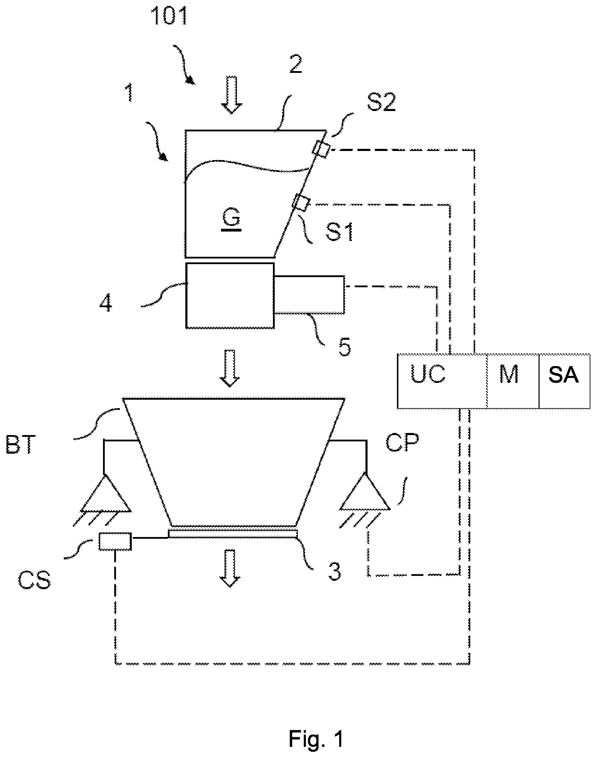

With reference to the aforementioned Figure 1, a batch dosing apparatus is shown comprising a control unit UC which implements a self-adaptive algorithm, where a dosing station 1, or a plurality of dosing stations 1, dose in sequence a quantity of material desired in a downstream hopper, the so-called batch hopper BT, where a mixture is obtained and through a specific dosing gate, or another shutter element, controlled by an actuator CS, the mixture is unloaded to be sent to a transforming machine. The dosing apparatus described includes, in a non-limiting way, at least one actuator 5 configured to regulate a dosing opening and an opening time, controlling a shutter element 4. The shutter element 4 is connected to a feeding hopper 2 of a material to be dosed. The feeding hopper 2 is equipped with a minimum level sensor S1, arranged to ensure a minimum filling of the feeding hopper 2. The feeding hopper 2 is also equipped with a maximum level sensor S2, arranged to stop the filling of the feeding hopper 2 by an external loading device, of a known type and therefore not illustrated.

The mixture is obtained in the batch hopper BT arranged downstream of the dosing station 1 or the plurality of dosing stations 1. The batch hopper BT is equipped with at least one weight detection unit, for example a weighing cell CP. The batch hopper BT is in turn equipped with at least one level sensor, not shown in the figures. The weight detection unit and the aforementioned level sensor provide a feedback signal (in particular to perform a closed loop control) to control the dosing station 1.

The batch hopper BT is also equipped with at least one element dedicated to the interception of the outgoing material which is activated at the end of the mixture obtaining step and which is controlled by an actuator CS.

The dosing apparatus may comprise, in particular, a sensor SA (so-called ambient sensor) arranged to detect and memorize environmental and/or installation conditions. The sensor SA allows you to store additional data, linked to the temperature and relative humidity, to be associated with the dosage recipe, in order to correct the dosage coefficients, if necessary.

The dosing apparatus comprises at least one control unit UC (of the electronic type and programmable with appropriate computer program instructions) which is connected to at least one memory unit M and which controls the various elements indicated with 5, CP, S1, S2, CS to ensure the desired dosage.

As will be better explained below, the control unit UC is configured to perform a self-adaptive adjustment of the dosage on a predictive basis.

When starting the dosing, the system establishes an opening section, based on previous laboratory tests on different materials, and makes a product flow. This allows the control system to understand and memorize the dosage quantity in the unit of time and then measure and store the data for those specific operating conditions (installation and use conditions of the dosing station and environmental conditions), known the value of the dosage that you want to achieve. The control system, through interpolation, establishes whether to increase or decrease the dosing opening and/or establish with which speed or speed profile to open or close the dosing opening.

The control system therefore allows you to establish, on a predictive basis, whether to act on the opening section or on the operating speed of the shutter element, based on the measurements made, to impose a condition of desired quantity to be dosed. The control system can essentially perform the steps of storing and reprocessing the data to establish the correct dosing method.

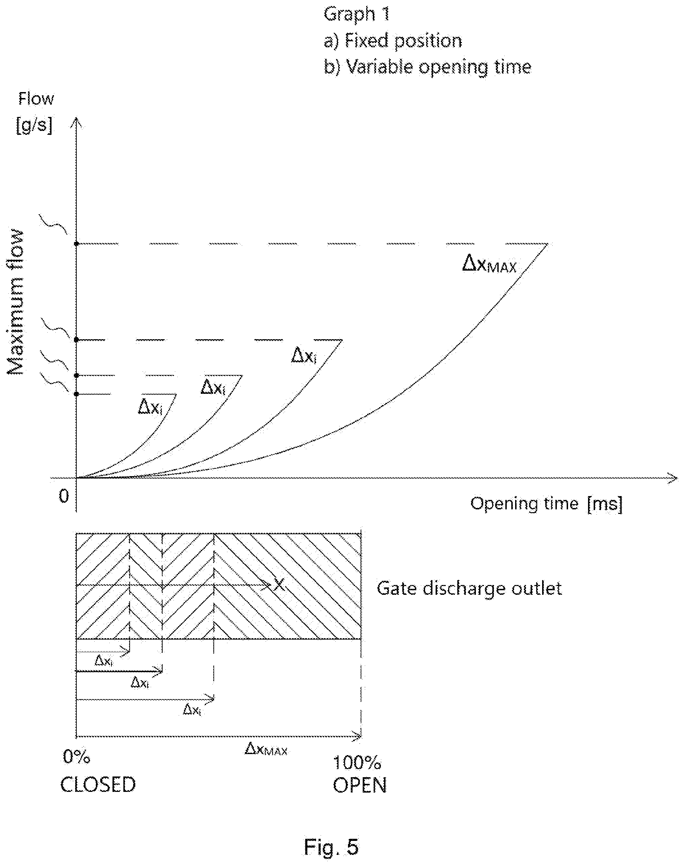

Figure 5 shows an example, purely indicative and not limiting, of a dosage chart obtained experimentally by means of laboratory tests. For example, the ordinate shows the flow rate of the product (expressed in g/s), while the abscissa shows the opening time, for example expressed in ms (milliseconds). The various curves are determined by assuming to open the gate with a fixed position, indicated by ΔX, with constant opening, so that production can be considered a function, for example a function of direct proportionality, of the opening time of the gate (shutter element).

The control system also allows to improve the dosing precision, establishing a correct dosage sequence in case of creation of a mixture of bulk products.

In one example, the control system adjusts the dosing sequence according to the dosing percentages required for each single dosing station.

Consider, as a non-limiting example, the creation of a polymer mixture consisting of a base polymer (virgin polymer) and additives (so-called masters, such as dyes and/or mineral fillers and/or other), which allow to modify the optical and/or mechanical and/or physical-chemical features of the base polymer. The base polymer may, in particular, be dosed with a much higher percentage than the other components of the mixture. In this case, the material with a higher percentage (for example the base polymer) is dosed at the beginning of the dosage sequence and those with a lower percentage are left at the end. By doing so, the error made on larger quantities can be corrected by adjusting, in real time, the smaller quantities, by correcting the dosage percentage in positive or negative. For example, if the first dosing station doses a larger quantity than expected, the subsequent dosing stations will be able to adjust and correct the error.

It is possible to determine a dosage sequence, as well as as a function of the dosage percentage, also as a function of the ease of descent of the material. The most difficult materials to dose - that is, whose behavior is more affected by the operating conditions, the installation and use conditions of the dosing station, the environmental conditions, deviating from the expected value of dosed quantity in the unit of time - may be dosed before the others, therefore the error can be corrected in the subsequent phases of the dosing sequence. The control system analyzes the greater or lesser ease of descent of the material by observing the dosed quantity as a function of the dosage time.

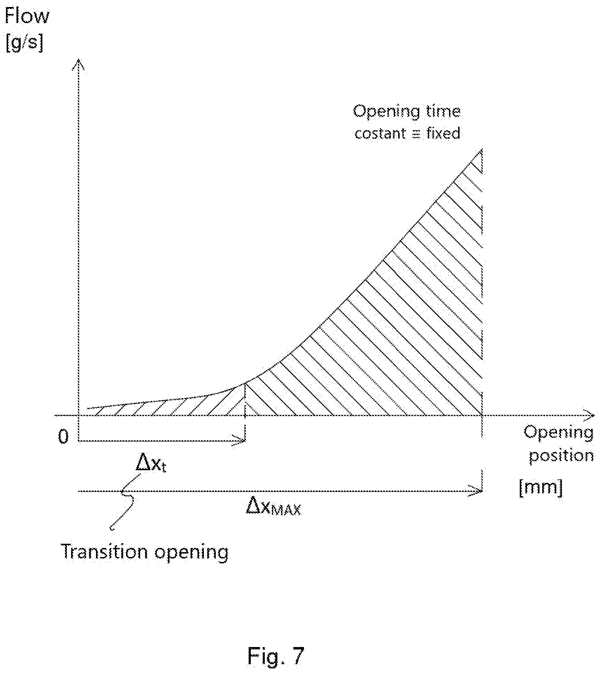

Figure 7 shows an indicative and non-limiting example of an experimental graph obtained by laboratory tests. The graph, which was obtained with a fixed gate (shutter element) opening time, shows a dosing profile - therefore a flow rate expressed, for example, in g/s - which is a function of the passage section. With the same dosing time (for simplicity, the opening and closing times have been neglected) it can be observed that the frictions of the material affect the flow rate when the passage sections have the lowest values. After a certain opening, defined as the transition opening ΔXt, the frictions affect the descent of the material much less.

It is possible to determine a dosing sequence also according to the type and/or dynamics of the adjustment element (gate). The geometric configuration, i.e. the dimensions of the dosing station and its geometry, may not be the optimal one for the material to be dosed. The control unit, on the basis of the data it acquires, may establish a correct sequence of insertion of the dosing station, in order to dose first the material on which it is more likely to make a major error and then the material on which it is most likely to make a minor mistake.

It is possible to determine a dosing sequence also as a function of the type of drive. In a plurality of dosing stations 1 it is possible to have different actuation means, with different dynamics and actuation times, and therefore with different errors for the same dosage percentages. The control unit, having known the probability of errors for the various dosing stations 1, determines where to insert the station in question in the dosing sequence, placing the dosing station with the greatest error first.

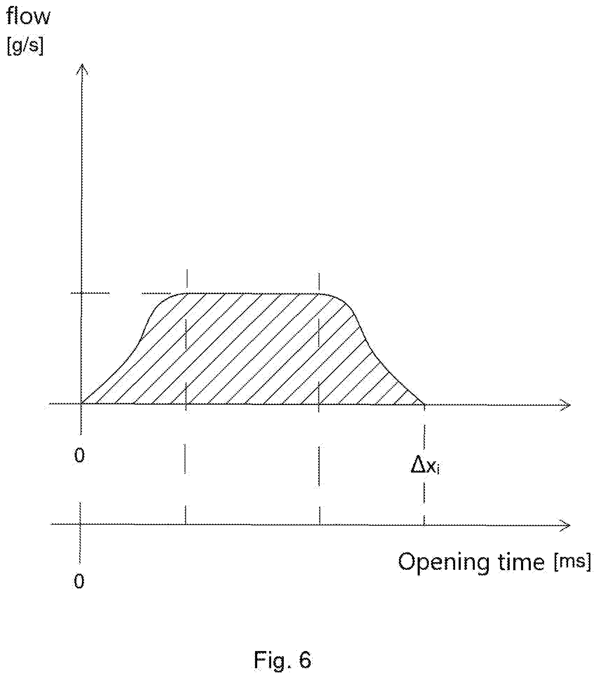

Figure 6 shows an example, purely indicative and not limiting, of an experimental graph that indicates the flow rate of the material as a function of the opening of the gate, during the opening phase, which lasts a few tens of milliseconds (ms). The material begins to move during opening, up to a maximum speed, and then descends again during closing. The flow rate of the material basically follows a trend similar to that of the exit speed of the material. It can be considered that the area subtended by the curve in Figure 6 is substantially proportional to the quantity of material dosed.

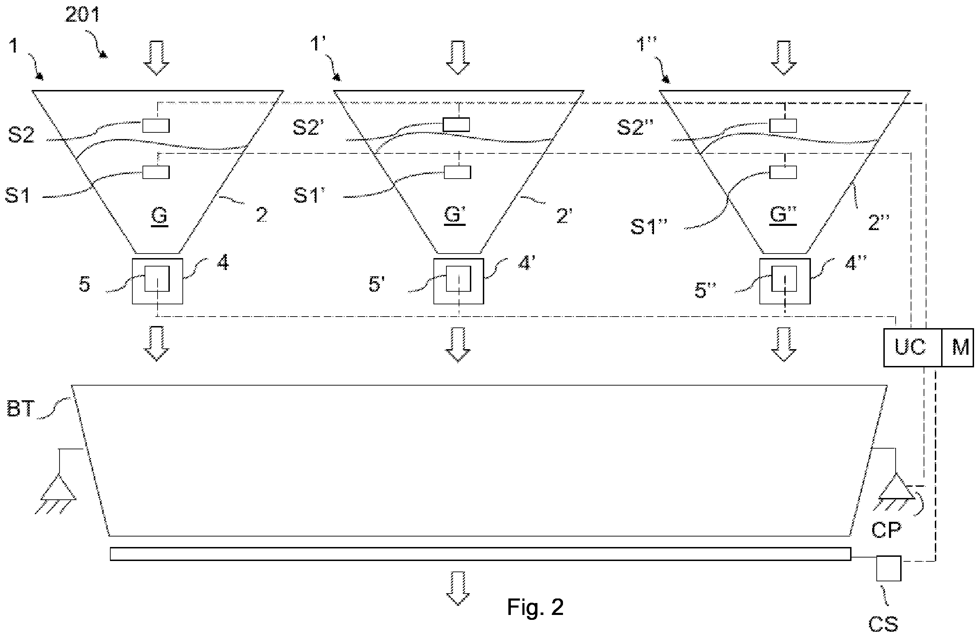

Figure 2 illustrates a non-limiting example of a dosing apparatus, seen from the front, of the same type as that described in Figure 1, equipped with a plurality of dosing stations 1, all connected to a control unit UC and all converging into a single BT hopper batch.

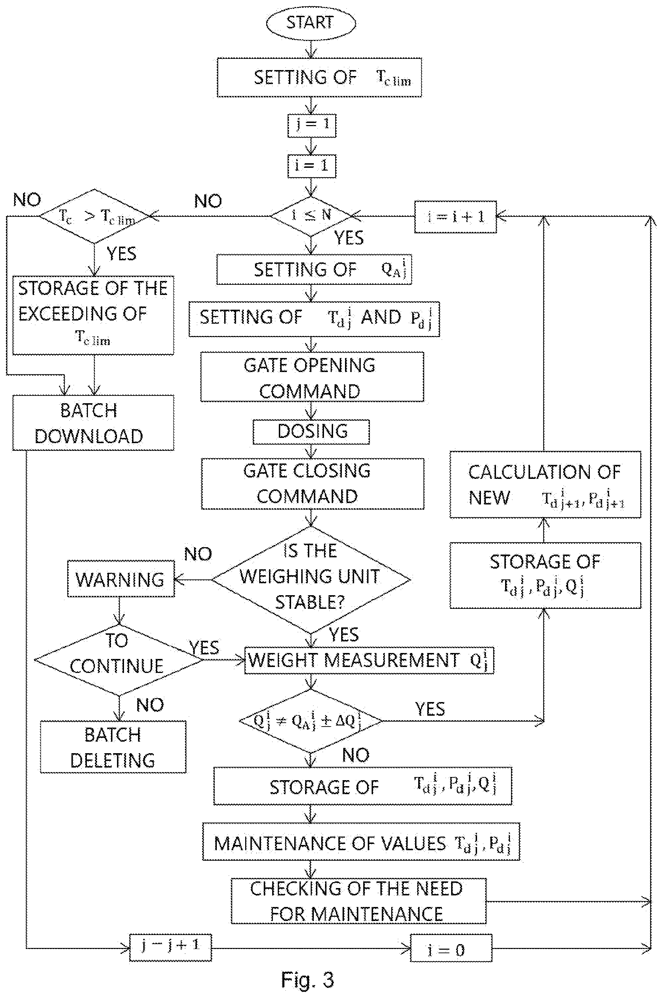

Figure 3 shows a block diagram which represents a non-limiting example of a self-adaptive control of the dosage and of the dosage sequence. For each instant of time T (time counter of the cycle), the control system establishes a dosage percentage of the dosing station. The control system then sets a certain opening position Pd and a certain opening time Td.

After an interval of time that elapses between the activation of the opening and the start of the weighing phase, the weighing cell CP measures a weight Q of a dosed material (for example continuously over time). The control unit UC compares the measured weight Q with the set dosage percentage and, if the measured value is different from the set dosage percentage (possibly considering more or less a predetermined tolerance), then the control system stores the opening time Td and opening position Pd in the memory unit M, calculates new data of opening time Td and opening position Pd (to approach the desired weight) and restarts the cycle at a later time T + ΔT. If, on the other hand, the measured weight and the set dosage percentage (plus or minus the predetermined tolerance) are equal to the desired value, the control system carries out a maintenance phase of the opening time and opening position parameters and iterates the cycle. The iteration may continue, in particular, until a measured machine cycle time becomes greater than a limit cycle time, that is the overall time within which the batch must be created and which depends on the transforming machine downstream of the dosing apparatus. At that point, the control system stores the opening time Td and opening position Pd data in the memory unit M, calculates new opening time Td and opening position Pd data and restarts the cycle at a later time T + ΔT.

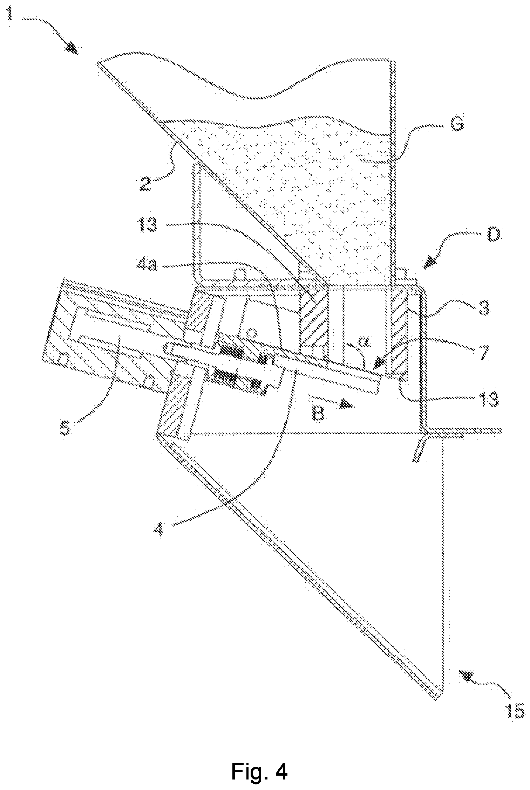

Figure 4 illustrates a non-limiting example of a dosing station 1, which may be used in the dosage method described here, arranged to dose a plastic product in granules and/or micro-granules and/or in flake, for example a polymeric resin, and associable with a dosing machine and/or mixing machine intended to feed a plant for the treatment and transformation of the aforementioned plastic product, for example an extrusion plant and subsequent injection molding, blow molding, compression molding.

The dosing station 1 comprises a feeding hopper 2 suitable for containing the product P, provided with a shutter element 4, arranged to open or close a dosing opening 7 of the feeding hopper 2 so as to allow or prevent the product from fall out of. The shutter element 4 is moved by actuator means 5. The shutter element 4 is slidably fixed to a casing 15 to which the actuator means 5 are externally fixed.

The shutter element 4 moved along a displacement direction B when opening moves away from a first transverse edge 11 and allows the product to escape through a passage section (created by the shutter element 4 with the metering opening 7) progressively increasing with the opening stroke of the shutter element 4. When the latter is in a position of maximum opening D, the passage section coincides with the section of the metering opening 7. The passage section may vary, in particular, in a non-linear way, for example in a parabolic way, since it depends on the linear displacement in the displacement direction B (movement of the actuator element 4) and on the variation of the transversal dimension (width L). In the construction shape illustrated as an example, the section has a trapezoidal shape, in particular with rounded vertices.

At the first transverse edge 11 of the metering opening 7 there is a shaped compartment 13 capable of receiving the product P when the shutter element 4 is moved into a closed position C. Plastic product in granules and/or flakes is not crushed and/or compressed and/or sheared between the upper surface 4a of the shutter element 4 and the edges of the metering opening 7 in the closing movement. In addition to preserving the integrity of the plastic product P, it prevents it from adhering to the shutter element 4, compromising its regular operation.

The actuator means 5 may comprise an electric actuator, in particular provided with a position or speed feedback control, for example an electric step-by-step motor capable of moving the shutter element 4 in a controlled position or speed.

The electric actuator may be of the linear type, so as to directly operate the shutter element 4, or it may be of the rotary type, so as to operate the shutter element 4 by means of motion transformation means including, for example, a ball screw-nut assembly.

The shutter element 4 may therefore be moved so as to partially open the dosing opening 7 with speed in the opening and closing movements that can be selected according to the quantity of product to be dosed and/or the features of the plastic product (dimensions, flowability, etc). It is therefore possible to more accurately and precisely adjust the dosage of the product P by choking the dosage opening 7 and adjusting the speed or the opening and/or closing position of the shutter element 4, for example in the case of small dosages.

The operation of the dosing station 1 may provide for the position or speed control of the shutter element 4, which may partially or completely open the dosing opening 7 according to the specific dosing requirements, defining sections of passage of variable area and adjustable at will and with precision.

In each dosing station 1, 1', 1" there is a product that composes the polymer mixture that you want to obtain in the batch hopper BT, for example a first product G, a second product G' and a third product G".

The operator sets, for example via the display or command interface connected to the control unit UC, a recipe for a polymer mixture, setting, in particular, the following data:
- a weight of the polymer mixture batch to be obtained;
- a percentage by weight of the various products G, G', G" to be dosed on the basis of a recipe for a polymer mixture;
- a weight tolerance on an expected weight of each product G, G', G";
- a dispensing sequence, i.e. a sequence of actuation of the dosing stations 1, 1', 1".

The recipe may be stored in the memory unit M and recalled by the operator via the command interface, in particular without having to manually enter additional data, as the above data is associated and stored with the recipe.

For each dosing station 1, 1', 1" involved in the formation of the polymer mixture, the control unit UC determines an expected weight QA, QA', QA" of the product G, G', G" making up the polymer mixture, this expected weight QA, QA', QA" being corresponding to the percentage by weight that the product must have in order to compose the polymeric mixture.

The control unit UC determines the opening positions Pd, Pd', Pd" and the opening times Td, Td', Td" of the shutter element 4 of the relative dosing station 1, 1', 1".

The control unit UC commands the dosing station 1, 1', 1" to dose the relative product G, G', G" on the basis of the dispensing sequence.

In one example, the first station of the dispensing sequence is the dosing station 1. Therefore, on the basis of the received command, the shutter element 4 is activated and the product G leaves the feeding hopper 2 and falls into the batch hopper BT. The batch hopper BT collects the product G dispensed by the dosing station 1 and the respective weighing unit CP detects a measured weight Qj1 of the product G collected there. The control unit UC receives the measured weight Qj1 measured by the weighing unit CP and compares this weight Qj1 with the expected weight QAj1 and respective weight tolerance ΔQj1 of this product G. If the measured weight Qj1 is out of the allowable tolerance, in defect or excess, the control unit UC stores the opening position Pdj 1, the opening time Tdj1 and the measured weight Qj1. Based on a calculation algorithm based on a function in which the weight is a function of the opening position and opening time, the control unit UC calculates a new opening position Pd(j + 1)1 and a new opening time Td(j + 1)1 which it will have to control the shutter element 4 during the subsequent actuation of the dosing station 1. Subsequently the cycle restarts for the following dosing station, established by the sequence of dosing stations set by the operator.

If, on the other hand, the measured weight Qj 1 is within the admissible tolerance range, the control unit UC keeps the opening position values Pdj 1 and the opening time Tdj1 constant, which will be controlled by the shutter element 4 during activation of the dosing station 1. Subsequently, the cycle restarts for the following dosing station, established by the sequence of dosing stations set by the operator.

Once the steps described above have been performed for all the preset dosing stations, a subsequent dosing cycle is passed, indicated with the index j + 1, comprising dosing from all the preset dosing stations. If the measured machine cycle time Tj is less than a limit cycle time Tclim, which is the total time within which the batch must be created and which is given by the transforming machine downstream of the dosing apparatus, the algorithm chooses a new sequence of dosing stations based on the data stored in the memory unit and repeats the cycle for all dosing stations.

If, on the other hand, the measured machine cycle time Tj is higher than a limit cycle time Tclim, the control unit UC stores the opening position Pdji, opening time Tdji and measured weight Qji data for all the dosing stations.

Before starting operation, the dosing apparatus may be subjected to an automatic calibration step, in order to determine the behavior of the dosing stations in relation to the features of the product to be dosed and environmental conditions. This calibration is performed for each dosing station, on a quantity of product less than that used in the operating phase in order not to waste material.

The calibration may comprise, for each dosing station, the following steps. At first, an operator sets, on the basis of previous laboratory tests, an expected weight of a Gi product, which is a component of a polymeric mixture, this expected weight being corresponding to the percentage by weight that the product must have in order to compose the polymeric mixture. The operator sets an opening time and a shutter opening position. The control unit UC commands the shutter opening. The Gi product falls from the dosing station to a batch hopper BT. The control unit UC commands the shutter to close. The control unit UC records a weight profile over time, measured by the weighing unit CP. The control unit UC calculates, with an algorithm based on a function in which the weight is a function of the opening position and opening time, a new opening position and a new opening time, which will be used in the operating phase in a first cycle for obtaining a batch.

The laboratory tests were conducted with constant conditions of material type, type of gate and respective actuator, relative humidity and ambient temperatures, hopper descent angles and filling level.

In operation, there is a cycle for obtaining a batch of a polymeric mixture to be produced, which may start, in particular, with the setting by an operator of a limit cycle time, i.e. the time maximum available to the machine to obtain the batch. The maximum time may be correlated to the maximum production required by the dosing system. The cycle of obtaining a batch is indicated with an index j. Each dosing station, which contributes to obtaining a batch, is indicated with an index i, with i ranging from 1 to N, where N is the number of dosing stations involved in the formation of the polymer mixture. The index j is set equal to 1. The index i is set equal to 1. A control unit UC checks, for each dosing station i, if the cycle to obtain a batch j is about to be performed for the first time. In the affirmative case, i.e. j = 1, the control unit, on the basis of data obtained during the calibration phase, sets an expected weight QAji of a product Gi, component of the polymer mixture, this expected weight QAji being corresponding to the weight that the product must have to compose the polymer mixture. In case j = 1, i.e. the batch obtaining cycle is performed for the first time, the control unit UC sets the opening position Pdji and the opening time Tdji of the shutter element 4 of the dosing station i.

If j is greater than 1, i.e. the batch obtaining cycle is not performed for the first time, the control unit sets the opening position Pdji and the opening time Tdji of the shutter element 4 of the dosing station i, on the basis of data stored in the previous cycle j.

Subsequently, in both cases, the control unit UC commands the shutter 4, of the dosing station indicated with i, to open. At this point, the dosing of the product Gi takes place, i.e. the fall of said product from the dosing station i to a batch hopper BT. After the opening time set Tdji, the control unit UC commands the shutter 4, of the dosing station indicated with i, to close.

Thereafter, a stability check of the weighing unit CP is carried out. The weighing unit CP must obtain a stable weight measurement within a predetermined time. If so, the weighing unit CP provides the weight Qji measurement. If not, the control unit generates a warning message and an operator can decide whether to proceed to measure the weight Qji or delete the batch, interrupting, in the latter case, the batch obtaining cycle.

Once the weighing cell CP has measured the measured weight Qji, the control unit UC receives the measured weight and compares this measured weight with the expected weight QAji of the product Gi and the respective weight tolerance ΔQji of this product Gi . If the measured weight Qji is out of tolerance, under or in excess, the control unit UC stores the opening position Pdji, the opening time Tdji and the measured weight Qji in the memory unit M. Based on an algorithm calculation based on a function (for example obtained empirically) in which the weight is a function of the opening position and opening time, the control unit UC calculates a new opening position Pd(j + 1)i and a new opening time Td(j + 1)i which will have to command the shutter element 4 during the actuation of the dosing station i in a subsequent cycle to obtain a batch j + 1.

Subsequently the index i is increased by one unit, to move to the next dosing station, and, if i is less than or equal to N, all the operations described above are performed starting from the control phase if j = 1.

If, on the other hand, the measured weight Qji is within the admissible tolerance range, the control unit UC stores the values of the opening position Pdji, the opening time Tdji and the measured weight Qji in the memory unit M, but, in this case, the opening position Pdji and opening time Tdji values will be commanded, as they are, without variations, to the shutter element 4 during the activation of the dosing station i in a subsequent cycle to obtain a batch j+1.

The index i is then increased by one unit, to move to the next dosing station, and, if i is less than or equal to N, all the operations described above are performed starting from the check if j = 1.

Once all the dosing stations have performed a dosage, the index i will be strictly greater than N, so the control unit UC will check if the time taken to create the batch is greater than the limit cycle time. If so, an exceeding of the limit cycle time will be stored in the memory unit M and the batch will be downloaded.

In case of exceeding the limit cycle time, the control algorithm will be able to implement a procedure to improve the performance of the dosage, for example by changing the dosage sequence. In an example, indicative and not limiting, it is possible to evaluate if a material is more difficult to dose than another, so the dosage sequence may be modified, so as to first perform the dosage of this material, and then correct the error of the first dosage by adjusting the dosage percentages of the other materials for which the dosing precision is less critical.

In another example, an adjustment algorithm is provided which evaluates the dosing capacity of each individual dosing station with respect to the minimum dosable value. In particular, if a certain geometry of the passage section of the material and/or a certain geometry of the metering unit cannot guarantee to keep the error within a predefined acceptability range, then the control system may establish to perform the dosing with that station first with respect to other dosing stations, in order to allow the correction of the dosing error, increasing or decreasing the subsequent dosed quantities in percentage ratio to the dosed quantity from the most critical station.

In the negative case, the batch will be unloaded directly. At this point the index j is increased by one unit to begin a new batch obtaining cycle and the index i is set equal to 0.

The above with reference to the operating parameters of opening position and opening time may be performed with reference to different operating parameters, such as for example opening speed (and/or closing) and opening time, and/or opening speed profile (and/or closing speed profile) and opening time, and/or opening position, opening speed (and/or closing) and opening time, etc.

## Claims

1. Dosing apparatus (101; 201) for dosing incoherent products (P) in form of granules, micro granules, flakes, powder or similar, said products (P) being, in particular, components of a polymeric mixture, said dosing apparatus (101; 201) comprising:
- one or more dosing stations (1) each comprising at least one feeding hopper (2) for containing one of said products (P) and at least one shutter element (4) for dosing the product (P), said feeding hopper (2) comprising at least one dosage opening (7), said shutter element (4) being configured to adjust said dosage opening (7) with a variable passage section according to a desired quantity of product to be dosed;
- at least one batch hopper (BT) configured to receive said products (P) from said one or more dosing stations (1) and provided with a weighing unit (CP) to detect a weight of a quantity of product (P) introduced into said batch hopper (BT) at each dosage of a quantity of product (P) from a dosing station (1);
- a control unit (UC) configured to control said shutter element (4) of each dosing station (1) so as to carry out the following operations:
* operating said shutter element (4) in a determined open position for a determined opening time to bring down a quantity of said product (P) by gravity from said feeding hopper (2) to said batch hopper (BT);
* receiving a signal from said weighing unit (CP), said signal being indicative of a weight value of said quantity;
* comparing said measured weight value with a reference weight value, in particular a desired weight dosage;
**characterized in that** said control unit (UC) is configured to control said shutter element (4) of each dosing station (1) so as to carry out the following operation:
* determining a set point value of the opening position of said shutter element (4) on the basis of the outcome of said comparison and/or determining a set point value of the opening time of said shutter element (4) on the basis of the outcome of said comparison.

2. Apparatus according to claim 1, wherein said control unit (UC) is configured to store data of a plurality of dosages for each shutter element (4) in a memory unit (M) to obtain a data base used for controlling each shutter element (4).

3. Apparatus according to claim 1 or 2, wherein each dosing station (1) comprises actuator means (5), in particular an electric actuator or a pneumatic actuator, for operating said shutter element (4).

4. Apparatus according to any one of the preceding claims, wherein said control unit (UC) is configured to control a dosage sequence based on the dosage percentages by weight required at each dosage station, whereby a dosage station which requires a higher dosage percentage by weight is activated before a dosage station which requires a lower dosage percentage by weight.

5. Apparatus according to any one of the preceding claims, wherein said control unit (UC) is configured to control a dosage sequence based on the deviations detected by a desired dosage value for each metering station, whereby a metering station for which a greater deviation from a desired dosage value has been detected will be activated before a dosage station for which a smaller deviation from a desired dosage value has been detected.

6. Apparatus according to any one of the preceding claims, wherein said control unit (UC) is configured to control a dosage sequence based on the types of product in the various dosing stations, whereby said control unit (UC) first determines ease of descent of the product for each dosing station based on a ratio between product weight and descent time of the product, then controls the various dosing stations so that a dosing station that contains a product with lower ease of descent is activated before a dosing station that contains a product with greater ease of descent.

7. Apparatus according to any of the preceding claims, wherein said control unit (UC) is configured to adjust an opening and/or closing speed of said shutter element (4) based on the outcome of said comparison, in particular by setting at least one set point value of said speed.

8. Apparatus according to any one of the preceding claims, wherein said control unit (UC) is configured to adjust an acceleration in opening and/or closing of said shutter element (4) based on the outcome of said comparison, in particular by setting at least one set point value of said acceleration.

9. Apparatus according to any one of the preceding claims, wherein said control unit (UC) is configured to adjust opening and/or closing of said shutter element (4) according to at least one determined speed profile based on the outcome of said comparison.

10. Apparatus according to any one of the preceding claims, wherein said control unit (UC) is configured to adjust speed and/or acceleration in opening and/or closing of said shutter element (4) on the basis of said comparison and according to the quantity of the dose of product to be dispensed.

11. Apparatus according to any one of the preceding claims, wherein said control unit (UC) is configured to adjust speed and/or acceleration in opening and/or closing of said shutter element (4) on the basis of said comparison and according to the type of product to be dosed, in particular as a function of grain size and/or flowability.

12. Apparatus according to any one of the preceding claims, wherein said control unit (UC) is configured to receive information relating to ambient temperature and/or ambient humidity, in particular relative ambient humidity, and to control at least one shutter element (4) of a dosing station (1) based on said information.

13. Apparatus according to any one of the preceding claims, wherein said feeding hopper (2) comprises at least one minimum level sensor (S1) and at least one maximum level sensor (S2) and/or wherein said batch hopper (BT) comprises at least one outlet with at least one shutter element controlled by an actuator (CS).

14. Apparatus according to any one of the preceding claims, wherein said control unit (UC) is configured to control the shutter elements (4) of each dosing station (1) to carry out dosages of product in an orderly sequential manner one at a time.

15. Dosing method for the dosage of incoherent products (P) in form of granules, micro granules, flakes, powder or similar, by making use of a dosing apparatus according to any one of the preceding claims, said products (P) being components of a polymeric mixture, wherein said method comprises the steps of:
- providing one or more dosing stations (1) each comprising at least one feeding hopper (2) to contain one of said products (P), each feeding hopper (2) with a dosage opening (7) adjustable by a shutter element (4);
- introducing said products (P) into a batch hopper (BT) where said polymeric mixture is formed, causing a dosed quantity of each product (P) to drop from the respective feeding hopper (2), one at a time at each dosage, passing through said dosage opening (7) of the respective feeding hopper (2);
- detecting at each dosage a weight of a quantity of product (P) introduced into said batch hopper (BT) and comparing said detected weight with a reference weight value;
- adjusting a set point value of said position of said shutter element (4) and/or a set point value of an opening time of said shutter element (4) based on the outcome of said comparison.

16. Method according to claim 15, wherein said adjusting step comprises adjusting a set point value of an end position and/or an opening time and/or an opening speed and/or a closing speed and/or an opening acceleration and/or a closing acceleration and/or an opening and closing speed profile of said shutter element (4), based on the outcome of said comparison.

## Patentansprüche

1. Dosiervorrichtung (101; 201) zum Dosieren von inkohärenten Produkten (P) in Form von Granulaten, Mikrogranulaten, Flocken, Pulver oder ähnlichem, wobei die Produkte (P) insbesondere Komponenten einer Polymermischung sind, die Dosiervorrichtung (101; 201) umfassend:
- eine oder mehrere Dosierstationen (1), jeweils umfassend mindestens einen Speisetrichter (2) zum Auffangen eines der Produkte (P) und mindestens ein Verschlusselement (4) zum Dosieren des Produkts (P), der Speisetrichter (2) umfassend mindestens eine Dosieröffnung (7), wobei das Verschlusselement (4) konfiguriert ist, um die Dosieröffnung (7) mit einem variablen Durchgangsabschnitt gemäß einer gewünschten Menge an zu dosierendem Produkt anzupassen;
- mindestens einen Chargentrichter (BT), der konfiguriert ist, um die Produkte (P) von der einen oder den mehreren Dosierstationen (1) aufzunehmen, und der mit einer Wiegeeinheit (CP) versehen ist, um ein Gewicht einer Menge an Produkt (P), das in den Chargentrichter (BT) eingeführt wird, bei jeder Dosierung einer Menge an Produkt (P) von einer Dosierstation (1) zu erfassen;
- eine Steuereinheit (UC), die konfiguriert ist, um das Verschlusselement (4) jeder Dosierstation (1) zu steuern, um die folgenden Vorgänge auszuführen:
* Betreiben des Verschlusselements (4) in einer bestimmten offenen Position für eine bestimmte Öffnungszeit, um eine Menge des Produkts (P) durch Schwerkraft von dem Speisetrichter (2) in den Chargentrichter (BT) abwärts zu bringen;
* Empfangen eines Signals von der Wiegeeinheit (CP), wobei das Signal einen Gewichtswert der Menge angibt;
* Vergleichen des gemessenen Gewichtswerts mit einem Referenzgewichtswert, insbesondere einer gewünschten Gewichtsdosis;
**dadurch gekennzeichnet, dass** die Steuereinheit (UC) konfiguriert ist, um das Verschlusselement (4) jeder Dosierstation (1) zu steuern, um die folgenden Vorgänge auszuführen:
* Bestimmen eines Sollwerts der Öffnungsposition des Verschlusselements (4) auf Basis des Ergebnisses des Vergleichs und/oder Bestimmen eines Sollwerts der Öffnungszeit des Verschlusselements (4) auf Basis des Ergebnisses des Vergleichs.

2. Vorrichtung nach Anspruch 1, wobei die Steuereinheit (UC) konfiguriert ist, um Daten einer Vielzahl von Dosierungen für jedes Verschlusselement (4) in einer Speichereinheit (M) zu speichern, um eine Datenbank zum Steuern jedes Verschlusselements (4) zu erhalten.

3. Vorrichtung nach Anspruch 1 oder 2, wobei jede Dosierstation (1) Aktuatormittel (5), insbesondere einen elektrischen Aktuator oder einen pneumatischen Aktuator zum Betätigen des Verschlusselements (4) umfasst.

4. Vorrichtung nach einem der vorstehenden Ansprüche, wobei die Steuereinheit (UC) konfiguriert ist, um eine Dosierungssequenz basierend auf den an jeder Dosierungsstation erforderlichen Dosierungsprozentsätzen nach Gewicht steuert, wobei eine Dosierungsstation, die einen höheren Dosierungsprozentsatz nach Gewicht erfordert, vor einer Dosierungsstation aktiviert wird, die einen niedrigeren Dosierungsprozentsatz nach Gewicht erfordert.

5. Vorrichtung nach einem der vorstehenden Ansprüche, wobei die Steuereinheit (UC) konfiguriert ist, um eine Dosierungssequenz basierend auf den von einem gewünschten Dosierungswert erfassten Abweichungen für jede Dosierstation zu steuern, wobei eine Messstation, für die eine größere Abweichung von einem gewünschten Dosierungswert erfasst wurde, vor einer Dosierstation, für die eine geringere Abweichung von einem gewünschten Dosierungswert erfasst wurde, aktiviert wird.

6. Vorrichtung nach einem der vorstehenden Ansprüche, wobei die Steuereinheit (UC) konfiguriert ist, um eine Dosierungssequenz basierend auf den Produkttypen in den verschiedenen Dosierstationen zu steuern, wobei die Steuereinheit (UC) zunächst die Leichtigkeit des Absinkens des Produkts für jede Dosierstation basierend auf einem Verhältnis zwischen Produktgewicht und Absinkzeit des Produkts bestimmt, dann die verschiedenen Dosierstationen steuert, sodass eine Dosierstation, die ein Produkt mit geringerer Leichtigkeit des Absinkens enthält, vor einer Dosierstation, die ein Produkt mit größerer Leichtigkeit des Absinkens enthält, aktiviert wird.

7. Vorrichtung nach einem der vorstehenden Ansprüche, wobei die Steuereinheit (UC) konfiguriert ist, um eine Öffnungs- und/oder Schließgeschwindigkeit des Verschlusselements (4) basierend auf dem Ergebnis des Vergleichs anzupassen, insbesondere durch Einstellen mindestens eines Sollwerts der Geschwindigkeit.

8. Vorrichtung nach einem der vorstehenden Ansprüche, wobei die Steuereinheit (UC) konfiguriert ist, um eine Beschleunigung beim Öffnen und/oder Schließen des Verschlusselements (4) basierend auf dem Ergebnis des Vergleichs anzupassen, insbesondere durch Einstellen mindestens eines Sollwerts der Beschleunigung.

9. Vorrichtung nach einem der vorstehenden Ansprüche, wobei die Steuereinheit (UC) konfiguriert ist, das Öffnen und/oder Schließen des Verschlusselements (4) gemäß mindestens einem bestimmten Geschwindigkeitsprofil basierend auf dem Ergebnis des Vergleichs anzupassen.

10. Vorrichtung nach einem der vorstehenden Ansprüche, wobei die Steuereinheit (UC) konfiguriert ist, um die Geschwindigkeit und/oder Beschleunigung beim Öffnen und/oder Schließen des Verschlusselements (4) auf Basis des Vergleichs und gemäß der Menge der abzugebenden Produktdosis anzupassen.

11. Vorrichtung nach einem der vorstehenden Ansprüche, wobei die Steuereinheit (UC) konfiguriert ist, um die Geschwindigkeit und/oder Beschleunigung beim Öffnen und/oder Schließen des Verschlusselements (4) auf Basis des Vergleichs und gemäß dem Typ des zu dosierenden Produkts, insbesondere in Abhängigkeit von der Korngröße und/oder Fließfähigkeit, anzupassen.

12. Vorrichtung nach einem der vorstehenden Ansprüche, wobei die Steuereinheit (UC) konfiguriert ist, um Informationen bezüglich der Umgebungstemperatur und/oder der Umgebungsfeuchtigkeit, insbesondere der relativen Umgebungsfeuchtigkeit, zu empfangen und mindestens ein Verschlusselement (4) einer Dosierstation (1) basierend auf diesen Informationen zu steuern.

13. Vorrichtung nach einem der vorstehenden Ansprüche, wobei der Speisetrichter (2) mindestens einen Minimumfüllstandssensor (S1) und mindestens einen Maximumfüllstandssensor (S2) umfasst und/oder wobei der Chargentrichter (BT) mindestens einen Auslass mit mindestens einem durch einen Aktuator (CS) gesteuerten Verschlusselement umfasst.

14. Vorrichtung nach einem der vorstehenden Ansprüche, wobei die Steuereinheit (UC) konfiguriert ist, um die Verschlusselemente (4) jeder Dosierstation (1) zu steuern, um Produktdosierungen in geordneter, sequentieller Weise eine nach der anderen auszuführen.

15. Dosierverfahren zum Dosieren von inkohärenten Produkten (P) in Form von Granulaten, Mikrogranulaten, Flocken, Pulver oder ähnlichem unter Verwendung einer Dosiervorrichtung nach einem der vorstehenden Ansprüche, wobei die Produkte (P) Komponenten einer Polymermischung sind, wobei das Verfahren die folgenden Schritte umfasst:
- Bereitstellen einer oder mehrerer Dosierstationen (1), jeweils umfassend mindestens einen Speisetrichter (2), um eines der Produkte (P) aufzufangen, wobei jeder Speisetrichter (2) mit einer Dosieröffnung (7) durch ein Verschlusselement (4) einstellbar ist;
- Einführen der Produkte (P) in einen Chargentrichter (BT), in dem die Polymermischung ausgebildet wird, wobei bewirkt wird, dass eine dosierte Menge jedes Produkts (P) aus dem jeweiligen Speisetrichter (2), einzeln bei jeder Dosierung, tropft, wobei diese durch die Dosierungsöffnung (7) des jeweiligen Speisetrichters (2) hindurchtritt;
- Erfassen, bei jeder Dosierung, eines Gewichts einer Menge an Produkt (P), das in den Chargentrichter (BT) eingeführt wird, und Vergleichen des erfassten Gewichts mit einem Referenzgewichtswert;
- Anpassen eines Sollwerts der Position des Verschlusselements (4) und/oder eines Sollwerts einer Öffnungszeit des Verschlusselements (4) basierend auf dem Ergebnis des Vergleichs.

16. Verfahren nach Anspruch 15, wobei der Anpassungsschritt das Anpassen eines Sollwerts einer Endposition und/oder einer Öffnungszeit und/oder einer Öffnungsgeschwindigkeit und/oder einer Schließgeschwindigkeit und/oder einer Öffnungsbeschleunigung und/oder einer Schließbeschleunigung und/oder eines Öffnungs- und Schließgeschwindigkeitsprofils des Verschlusselements (4) basierend auf dem Ergebnis des Vergleichs umfasst.

## Revendications

1. Appareil de dosage (101; 201) destiné à doser des produits (P) incohérents sous forme de granulés, microgranulés, flocons, poudre ou similaires, lesdits produits (P) étant, en particulier, des composants d'un mélange polymérique, ledit appareil de dosage (101; 201) comprenant:
- une ou plusieurs stations de dosage (1) comprenant chacune au moins une trémie d'alimentation (2) destinée à contenir l'un desdits produits (P) et au moins un élément obturateur (4) destiné à doser le produit (P), ladite trémie d'alimentation (2) comprenant au moins une ouverture de dosage (7), ledit élément obturateur (4) étant conçu pour ajuster ladite ouverture de dosage (7) avec une section de passage variable en fonction d'une quantité souhaitée de produit à doser;
- au moins une trémie de chargement (BT) conçue pour recevoir lesdits produits (P) à partir de ladite ou desdites stations de dosage (1) et pourvue d'une unité de pesage (CP) destinée à détecter un poids d'une quantité de produit (P) introduite dans ladite trémie de chargement (BT) à chaque dosage d'une quantité de produit (P) à partir d'une station de dosage (1);
- une unité de commande (UC) conçue pour commander ledit élément obturateur (4) de chaque station de dosage (1) afin d'effectuer les opérations suivantes:
* le fonctionnement dudit élément obturateur (4) dans une position d'ouverture déterminée pendant un temps d'ouverture déterminé afin de faire descendre une quantité dudit produit (P) par gravité à partir de ladite trémie d'alimentation (2) vers ladite trémie de chargement (BT);
* la réception d'un signal à partir de ladite unité de pesage (CP), ledit signal étant indicatif d'une valeur de poids de ladite quantité;
* la comparaison de ladite valeur de poids mesurée à une valeur de poids de référence, en particulier à un dosage de poids souhaité;
**caractérisé en ce que** ladite unité de commande (UC) est conçue pour commander ledit élément obturateur (4) de chaque station de dosage (1) afin d'effectuer l'opération suivante:
* la détermination d'une valeur de consigne de la position d'ouverture dudit élément obturateur (4) sur la base du résultat de ladite comparaison et/ou la détermination d'une valeur de consigne du temps d'ouverture dudit élément obturateur (4) sur la base du résultat de ladite comparaison.

2. Appareil selon la revendication 1, dans lequel ladite unité de commande (UC) est conçue pour stocker des données d'une pluralité de dosages pour chaque élément obturateur (4) dans une unité de mémoire (M) afin d'obtenir une base de données utilisée pour commander chaque élément obturateur (4).

3. Appareil selon la revendication 1 ou 2, dans lequel chaque station de dosage (1) comprend un moyen actionneur (5), en particulier un actionneur électrique ou un actionneur pneumatique, destiné à actionner ledit élément obturateur (4).

4. Appareil selon l'une quelconque des revendications précédentes, dans lequel ladite unité de commande (UC) est conçue pour commander une séquence de dosage sur la base des pourcentages de dosage en poids requis au niveau de chaque station de dosage, selon lequel une station de dosage qui nécessite un pourcentage de dosage en poids plus élevé est activée avant une station de dosage qui nécessite un pourcentage de dosage en poids plus faible.

5. Appareil selon l'une quelconque des revendications précédentes, dans lequel ladite unité de commande (UC) est conçue pour commander une séquence de dosage sur la base des écarts détectés par rapport à une valeur de dosage souhaitée pour chaque station de mesure, selon lequel une station de mesure pour laquelle un écart plus important par rapport à une valeur de dosage souhaitée a été détecté sera activée avant une station de dosage pour laquelle un écart plus faible par rapport à une valeur de dosage souhaitée a été détecté.

6. Appareil selon l'une quelconque des revendications précédentes, dans lequel ladite unité de commande (UC) est conçue pour commander une séquence de dosage sur la base des types de produit dans les différentes stations de dosage, selon lequel ladite unité de commande (UC) détermine d'abord la facilité de descente du produit pour chaque station de dosage sur la base d'un rapport entre un poids de produit et un temps de descente du produit, puis commande les différentes stations de dosage de sorte qu'une station de dosage qui contient un produit avec une plus faible facilité de descente est activée avant une station de dosage qui contient un produit avec une plus grande facilité de descente.

7. Appareil selon l'une quelconque des revendications précédentes, dans lequel ladite unité de commande (UC) est conçue pour ajuster une vitesse d'ouverture et/ou de fermeture dudit élément obturateur (4) sur la base du résultat de ladite comparaison, en particulier en définissant au moins une valeur de consigne de ladite vitesse.

8. Appareil selon l'une quelconque des revendications précédentes, dans lequel ladite unité de commande (UC) est conçue pour ajuster une accélération d'ouverture et/ou de fermeture dudit élément obturateur (4) sur la base du résultat de ladite comparaison, en particulier en définissant au moins une valeur de consigne de ladite accélération.

9. Appareil selon l'une quelconque des revendications précédentes, dans lequel ladite unité de commande (UC) est conçue pour ajuster une ouverture et/ou fermeture dudit élément obturateur (4) en fonction d'au moins un profil de vitesse déterminé sur la base du résultat de ladite comparaison.

10. Appareil selon l'une quelconque des revendications précédentes, dans lequel ladite unité de commande (UC) est conçue pour ajuster une vitesse et/ou accélération lors de l'ouverture et/ou fermeture dudit élément obturateur (4) sur la base de ladite comparaison et en fonction de la quantité de la dose de produit à distribuer.

11. Appareil selon l'une quelconque des revendications précédentes, dans lequel ladite unité de commande (UC) est conçue pour ajuster une vitesse et/ou accélération lors de l'ouverture et/ou fermeture dudit élément obturateur (4) sur la base de ladite comparaison et en fonction du type de produit à doser, notamment en fonction d'une granulométrie et/ou fluidité.

12. Appareil selon l'une quelconque des revendications précédentes, dans lequel ladite unité de commande (UC) est conçue pour recevoir des informations relatives à une température ambiante et/ou humidité ambiante, en particulier relatives à une humidité ambiante relative, et pour commander au moins un élément obturateur (4) d'une station de dosage (1) sur la base desdites informations.

13. Appareil selon l'une quelconque des revendications précédentes, dans lequel ladite trémie d'alimentation (2) comprend au moins un capteur de niveau minimal (S1) et au moins un capteur de niveau maximal (S2) et/ou dans lequel ladite trémie de chargement (BT) comprend au moins une sortie avec au moins un élément obturateur commandé par un actionneur (CS).

14. Appareil selon l'une quelconque des revendications précédentes, dans lequel ladite unité de commande (UC) est conçue pour commander les éléments obturateurs (4) de chaque station de dosage (1) afin d'effectuer des dosages de produit de manière séquentielle ordonnée, un à la fois.

15. Procédé de dosage pour le dosage de produits (P) incohérents sous forme de granulés, microgranulés, flocons, poudre ou similaires, en utilisant un appareil de dosage selon l'une quelconque des revendications précédentes, lesdits produits (P) étant des composants d'un mélange polymérique, dans lequel ledit procédé comprend les étapes consistant à:
- fournir une ou plusieurs stations de dosage (1) comprenant chacune au moins une trémie d'alimentation (2) destinée à contenir l'un desdits produits (P), chaque trémie d'alimentation (2) ayant une ouverture de dosage (7) réglable par un élément obturateur (4);
- introduire lesdits produits (P) dans une trémie de chargement (BT) où ledit mélange polymérique est formé, faisant descendre une quantité dosée de chaque produit (P) à partir de la trémie d'alimentation (2) respective, une à la fois à chaque dosage, et passer par ladite ouverture de dosage (7) de la trémie d'alimentation (2) respective;
- détecter à chaque dosage un poids d'une quantité de produit (P) introduite dans ladite trémie de chargement (BT) et comparer ledit poids détecté à une valeur de poids de référence;
- ajuster une valeur de consigne de ladite position dudit élément obturateur (4) et/ou une valeur de consigne d'un temps d'ouverture dudit élément obturateur (4) sur la base du résultat de ladite comparaison.

16. Procédé selon la revendication 15, dans lequel ladite étape d'ajustement comprend l'ajustement d'une valeur de consigne d'une position finale et/ou d'un temps d'ouverture et/ou d'une vitesse d'ouverture et/ou d'une vitesse de fermeture et/ou d'une accélération d'ouverture et/ou d'une accélération de fermeture et/ou d'un profil de vitesse d'ouverture et de fermeture dudit élément obturateur (4), sur la base du résultat de ladite comparaison.
